# FASCICULE DE BREVET EUROPEEN

(11) **EP 0 449 702 B1**
(45) Date de publication et mention de la délivrance du brevet: **20.07.1994**
(21) Numéro de dépôt: 91400736.4
(22) Date de dépôt: 19.03.1991
(51) Int. Cl.: B64F 1/12

(54) **Dispositif de manoeuvre d'un engin supporté par un train principal et au moins une roue orientable, tel qu'un hélicoptère, entre deux zones déterminées sur une plate-forme, telles qu'une aire d'appontage et une aire de garage sur un pont de navire**
Verfahranlage eines Körpers durch ein Hauptfahrwerk und wenigstens ein schwenkbares Rad getragen, wie ein Hubschrauber, zwischen einem Lande- und einem Hallenbereich
Traversing device of a body supported by a main gear and at least a castering wheel, like a helicopter between a landing and a hangar area

(30) Priorité: 29.03.1990 FR 9004039
(43) Date de publication de la demande: 02.10.1991
(73) Titulaire: AEROSPATIALE Société Nationale Industrielle, 75781 Paris Cédex 16 (FR)
(72) Inventeur: Bernard, Louis Arthur, F-13730 Saint-Victoret (FR); Thomassin, René, F-13880 Velaux (FR)
(74) Mandataire: Phélip, Bruno

(56) Documents cités:
- EP-A- 0 103 519
- FR-A- 2 462 341
- US-A- 3 830 452
- US-A- 4 319 722

## Description

La présente invention est relative à un dispositif consistant en la combinaison d'un engin supporté par un train principal et au moins une roue orientable, tel qu'un hélicoptère, et de moyens de manoeuvre dudit engin entre deux zones prédéterminées sur une plate-forme sensiblement plane, telles qu'une aire d'appontage et une aire de garage sur un pont de navire. En particulier la ou les roues orientables peut ou peuvent être celle(s) d'un atterrisseur auxiliaire avant non piloté d'un train d'atterrissage tricycle, ou bien la roulette de queue ou arrière orientable d'un hélicoptère dont le train principal comporte deux atterrisseurs latéraux avant.

De nos jours, de nombreux navires, tels que des navires de guerre, des chalutiers de pêche industrielle, des navires d'exploration, par exemple pétrolière, ou même des plates-formes de forage, sont aménagés pour pouvoir recevoir des hélicoptères et éventuellement les remiser. Ils sont généralement équipés pour cela de plates-formes munies de dispositifs d'aide à l'appontage et/ou de sécurité destinés à réduire les risques d'accidents en cas respectivement d'appontages rendus difficiles par des conditions atmosphériques mauvaises et/ou de manoeuvres des hélicoptères sur les plates-formes.

Un tel dispositif de sécurité a notamment déjà été décrit par la demanderesse dans son brevet FR-2.532.910, qui fait état d'un dispositif de manoeuvre permettant d'assurer le déplacement d'engins sur une plate-forme plane entre deux zones de celle-ci, telles qu'une aire de décollage et une aire de remisage. En particulier, le dispositif décrit dans ce brevet comporte un rail de guidage s'étendant d'une desdites zones à l'autre et le long duquel est destiné à se déplacer un chariot de guidage muni d'un organe de liaison à l'hélicoptère qui s'accroche sur un point d'attache du fuselage dudit hélicoptère.

L'hélicoptère une fois posé sur la plate-forme est entraîné dans son déplacement, d'une zone à l'autre de ladite plate-forme, par des moyens de halage et orienté dans son mouvement par l'intermédiaire d'une barre de guidage reliée à l'une de ses extrémités à la ou les roues orientables avant ou à la roulette arrière orientable dudit hélicoptère, de façon que l'axe de ladite barre se trouve constamment sensiblement dans le plan médian de ladite ou lesdites roues ou roulette, son autre extrémité coulissant dans ledit rail de guidage. De ce fait, l'hélicoptère, qui est maintenu verticalement et centré sur le rail de guidage par le chariot précité, s'aligne automatiquement et progressivement sur le rail de guidage au début de son déplacement.

Cependant, un tel dispositif nécessite, au préalable, que l'hélicoptère, après avoir été posé sur la plate-forme, soit manoeuvré pour que le point d'attache sur son fuselage se trouve très exactement à la verticale du chariot de guidage. Dans une des réalisations proposées par ce brevet FR-2.532.910, l'hélicoptère reste maintenu sur la plate-forme au cours de cette manoeuvre, grâce à un système connu d'aide à l'appontage du type harpon-grille, l'hélicoptère appontant sur ladite grille, se fixant par son harpon sur cette grille, puis pivotant autour dudit harpon jusqu'à ce que le point d'attache de son fuselage au chariot de guidage se retrouve à la verticale du rail de guidage.

Un tel dispositif de sécurité nécessite donc un équipement spécial de la plate-forme et de l'hélicoptère. La plate-forme doit, en effet, être munie d'une grille d'appontage. En outre, elle ne peut être utilisée par des hélicoptères standards non munis de harpon.

Un dispositif de sécurité d'un autre type a encore été décrit dans la demande de brevet FR-2.234.190, qui fait état, pour sa part, d'un dispositif comprenant, sur une plate-forme, un rail de guidage le long duquel circule un chariot entraîné par un câble passant dans le rail et enroulé sur un treuil. Ce chariot est muni d'un manchon pivotant, apte à pivoter sur ledit chariot autour d'un axe vertical, et dans lequel est montée coulissante une poutre-caisson fixée par ses deux extrémités aux axes des roues des atterrisseurs principaux. Cette poutre-caisson, à extrémités télescopiques, est munie dans sa longueur de dentures destinées à coopérer avec un cliquet d'immobilisation monté sur le manchon pour bloquer ladite poutre par rapport audit manchon et donc audit chariot, après alignement préalable de l'hélicoptère sur le rail rectiligne. Le dispositif comprend également deux treuils latéraux sur lesquels sont enroulés deux câbles accrochés de part et d'autre de la partie arrière du fuselage de l'hélicoptère afin de permettre l'alignement de ce dernier sur le rail, ledit hélicoptère étant tracté après l'étape d'alignement et de verrouillage par l'intermédiaire de la poutre-caisson et du chariot.

Cependant, l'opération d'alignement de l'hélicoptère par les treuils latéraux, qui est une opération longue et fastidieuse, est obligatoirement réalisée avant de pouvoir commencer à tracter l'hélicoptère. Par ailleurs, un tel dispositif, qui comprend notamment un mécanisme à solénoïdes et des circuits électriques y afférant, pour commander le cliquet et la solidarisation du manchon avec la poutre-caisson, est encombrant, complexe et fragile. En outre, il faut aussi noter qu'un tel dispositif est plus particulièrement destiné à des hélicoptères avec atterrisseur auxiliaire arrière (roulette de queue), et nécessite une adaptation de l'atterrisseur principal pour que l'on puisse y fixer la poutre-caisson. Enfin, ce dispositif s'utilise conjointement avec un dispositif d'aide à l'appontage d'un autre type que le dispositif grille-harpon, mais nécessitant des aménagements encore plus importants que ce dernier sur la plate-forme et sous celle-ci.

Un but de l'invention est de proposer un dispositif de manoeuvre d'un hélicoptère sur le pont d'un navire permettant de pallier les inconvénients précités des dispositifs proposés par le brevet FR-2.532.910 et la demande de brevet FR-2.234.190. L'invention propose notamment un système très simple, aussi bien quant à l'outillage, que quant à l'équipement du navire qu'il nécessite, et grâce auquel l'hélicoptère est, après appontage, maintenu verticalement à l'encontre de tout renversement et horizontalement à l'encontre de tout glissement et simultanément, d'une part tracté vers, par exemple, le hangar de remisage, et d'autre part, recentré et aligné sur le rail de guidage sans qu'aucune manoeuvre préalable de l'hélicoptère ne soit nécessaire.

Plus particulièrement, l'invention propose un dispositif qui ne nécessite sur le navire, outre un rail de guidage et des treuils latéraux et de traction, qui constituent un matériel facile et peu coûteux à installer sur des navires qui en sont initialement dépourvus, et dont sont classiquement équipés les navires destinés à recevoir les hélicoptères, qu'une barre d'orientation coulissant par une de ses extrémités le long du rail de guidage et des moyens de maintien et de guidage de l'appareil sur le rail. Ces moyens de maintien et de guidage sont, selon l'invention, constitués par un chariot de maintien non tracté, qui est guidé et retenu verticalement par le rail, et sur lequel est monté un pivot vertical tourillonnant sur 360 surmonté d'un palier d'axe perpendiculaire à l'axe dudit pivot, et dans lequel coulisse librement un bras horizontal à verrouillage automatique dans l'axe, dont les extrémités se fixent sur les côtés du fuselage de l'hélicoptère sur des points d'amarrage structuraux disposés près de l'emplanture des atterrisseurs principaux. Lors du déplacement de l'hélicoptère de sa zone d'appontage vers sa zone de remisage, l'hélicoptère, entraîné par la barre d'orientation, dont l'extrémité guidée dans le rail est tractée par un câble passant dans ce rail et enroulé sur un treuil, s'aligne progressivement sur le rail de guidage le bras coulissant se recentrant alors automatiquement par rapport au chariot de maintien en se verrouillant par rapport à celui-ci, dès qu'il se trouve dans une position où l'hélicoptère est sensiblement aligné avec ledit rail de guidage. Pendant toute la manoeuvre, l'hélicoptère est ainsi étroitement maintenu verticalement sur le pont, ce qui évite toute tendance au renversement sous l'effet des mouvements du navire et/ou du vent relatif, et horizontalement, ce qui évite tout glissement.

En outre, un autre avantage du dispositif proposé par l'invention, tient en ce que le bras de maintien n'est pas relié aux roues des atterrisseurs principaux de l'hélicoptère, mais à des points structuraux latéraux du fuselage, et que les possibles oscillations latérales de l'hélicoptère sur les atterrisseurs principaux, sous l'effet des mouvements de roulis du bateau et/ou des rafales de vent, sont de ce fait interdites. En particulier, le dispositif conforme à l'invention permet d'effectuer avec sécurité une manutention de l'hélicoptère par mer et vent moyens (mer de force 4, vent de 4 à 6 sur l'échelle de Beaufort), et par au moins plus ou moins 8 de roulis, plus ou moins 3 de tangage et 30 noeuds de vent à plus ou moins 30 de l'avant de l'hélicoptère, ces valeurs étant données à titre indicatif et pouvant évoluer en fonction du type d'hélicoptère et des caractéristiques dvnamiaues du navire support.

La présente invention a donc pour objet un dispositif consistant en la combinaison d'un engin supporté par un train principal et au moins une roue orientable, tel qu'un hélicoptère, et de moyens de manoeuvre dudit engin entre deux zones prédéterminées sur une plate-forme sensiblement plane, ce dispositif comportant un rail de guidage s'étendant d'une zone à l'autre de la plate-forme, un mécanisme de halage disposé sur la plate-forme et destiné à entraîner l'engin d'une zone à l'autre, une barre d'orientation de la trajectoire de l'engin, destiné à être reliée par une de ses extrémités audit engin, son autre extrémité coulissant le long du rail de guidage, au moins un chariot de maintien apte à se déplacer le long du rail de guidage, ce chariot de maintien étant associé à des moyens de liaison à l'engin, caractérisé en ce que au moins deux points d'amarrage latéraux sont disposés sur l'engin à manoeuvrer de part et d'autre d'un plan vertical médian de l'engin et en ce que les moyens de liaison comportent:
- un bras de maintien associé à des moyens d'attache permettant d'attacher chacune de ses extrémités à l'un au moins des points d'amarrage latéraux et à des moyens d'appui par lesquels chacune de ses extrémités s'appuie sur la plate-forme plane;
- un organe de liaison monté sur le chariot de maintien sur lequel ledit bras de maintien peut coulisser entre ses deux extrémités, ledit organe de liaison maintenant ledit bras de maintien par rapport audit chariot de maintien;
- des moyens de verrouillage automatique dudit organe de liaison par rapport au bras de maintien dans une position correspondant sensiblement au centrage de l'engin sur le rail de guidage;
- des moyens pivots autorisant le pivotement du bras de maintien par rapport au chariot de maintien, autour d'un axe sensiblement perpendiculaire à la plate-forme.

Avantageusement l'extrémité de la barre d'orientation reliée à l'engin est reliée à ladite roue orientable. La barre d'orientation peut être articulée en pivotement par rapport à ladite roue orientable, ledit dispositif comportant des moyens de verrouillage automatique de la barre d'orientation, par rapport à ladite roue orientable, dans une position où l'axe de ladite barre d'orientation se trouve sensiblement dans un plan parallèle ou confondu avec le plan médian de ladite roue orientable. La barre d'orientation peut être reliée à ladite roue orientable par l'intermédiaire d'une chape montée sur l'axe de ladite roue orientable. La barre d'orientation peut être articulée en pivotement sur la chape. La barre d'orientation peut être de longueur réglable et notamment télescopique.

Préférentiellement, le mécanisme de halage comporte, vers une extrémité d'un rail de guidage, un treuil de traction enroulant un câble relié à un chariot de traction monté, mobile le long du rail de guidage et sur lequel est articulée la barre d'orientation à son extrémité la plus éloignée de l'engin, la barre d'orientation servant ainsi de barre de traction de l'engin. Le rail de guidage est avantageusement un rail creux dans lequel s'étend le câble relié au chariot de traction. Le dispositif peut aussi comporter deux treuils latéraux sur lesquels sont enroulés des câbles destinés à être reliés latéralement à l'engin, ces deux treuils latéraux étant disposés sur la plate-forme dans celle des deux zones qui est opposée à la zone dans laquelle est disposé le treuil de traction, de sorte que ces deux treuils latéraux puissent fonctionner en treuils résistants ou de freinage lorsqu'un treuil de traction ou moteur tire l'hélicoptère d'une zone vers l'autre, et inversement lors de déplacements en sens inverse.

De façon avantageuse, les points d'amarrage latéraux, sur lesquels les extrémités du bras de maintien sont attachées, sont proches de jambes latérales de support de roues du train principal. Les points d'amarrage sont des points d'amarrage structuraux sur le fuselage de l'engin. Les moyens d'attache d'une extrémité du bras de maintien à un point d'amarrage peuvent comporter au moins une bielle réglable en longueur, pour permettre l'adaptation du dispositif à l'engin.

De façon préférentielle encore, le bras de maintien est muni, vers chacune de ses extrémités, d'au moins une roulette destinée à prendre appui sur la plate-forme. Sur le chariot de maintien peut être monté un pivot qui porte un palier, cylindrique ou parallélipipédique d'axe sensiblement perpendiculaire à l'axe du pivot, ledit palier recevant en son intérieur le bras de maintien et étant l'organe de liaison par rapport auquel ledit brai de maintien est monté coulissant.

De façon avantageuse encore, les moyens de verrouillage comportent un pion s'étendant, en position de verrouillage, partiellement dans un premier évidement ménagé dans l'organe de liaison et partiellement dans un deuxième évidement ménagé sur le bras de maintien, ledit pion étant totalement disposé, en position déverrouillée, dans l'un de ces deux évidements et étant associé à des moyens élastiques tendant à le repousser hors dudit évidement, vers celui de l'organe de liaison ou du bras de maintien dans lequel est ménagé l'autre évidement. L'évidement dans lequel est disposé le pion dans sa position déverrouillée peut être ménagé dans l'organe de liaison, auquel cas le pion peut être facilement associé à des moyens de déverrouillage manuel des moyens de verrouillage automatique dudit organe de liaison par rapport au bras de maintien. Les moyens de déverrouillage manuel peuvent comporter une tirette extérieure reliée au pion et propre à être saisie par un opérateur.

Avantageusement encore, le dispositif comporte des moyens auxiliaires de guidage de roue(s) orientable(s) le long du rail de guidage. Lesdits moyens auxiliaires peuvent, consister en une petite barre d'orientation, et comporter une chape destinée à être montée sur l'axe d'une roue orientable, ladite chape étant munie à une de ses extrémités d'un galet coulissant le long du rail de guidage, dans la partie de ce dernier qui est située de l'autre côté de la ou des roue(s) orientable(s) par rapport à la partie du rail de guidage dans laquelle sont guidés le chariot de traction et l'extrémité correspondante de la barre d'orientation. La petite barre en forme de chape n'est utilisée que pour guider la roue orientable lors des déplacements de la zone de remise à la zone d'appontage, servant aussi au décollage, le halage de l'hélicoptère dans ce sens de déplacement étant assuré par les treuils latéraux, qui fonctionnent en treuils de traction, ou moteurs, alors que le treuil monté en bout du rail de guidage correspondant fonctionne en treuil résistant ou de freinage. Pour l'attache sur l'hélicoptère des câbles manoeuvrés par les treuils latéraux, on utilise des anneaux en saillie latérale vers l'extérieur sur les extrémités des axes de la ou des roues des atterrisseurs latéraux et principaux de l'hélicoptère, de sorte que ces câbles ne sont pas protégés dans des guides spécifiques sur la plate-forme, contrairement au câble manoeuvré par un treuil disposé en bout d'un rail de guidage, qui est logé dans ce rail en creux, lequel peut être intégré dans la plate-forme, si le dispositif a été monté d'origine sur la plate-forme, ou rapporté en saillie sur la plate-forme, si le dispositif n'a pas été initialement intégré à cette dernière.

La description qui suit est donnée à titre purement illustratif et non limitatif. Elle doit être lue en regard des dessins annexés.

Sur ces dessins:

Les Figures 1 à 6 représentent schématiquement en plan différentes étapes de manoeuvre d'un hélicoptère lors de son appontage et de son transfert de son aire d'appontage jusqu'à son aire de remisage dans le cas d'une plate-forme pouvant recevoir deux hélicoptères.

Les Figures 7 à 9 représentent schématiquement en plan différentes étapes de manoeuvre d'un hélicoptère lors de son transfert de son aire de remisage, jusqu'à son aire d'appontage, en vue d'un décollage.

La Figure 10 est une vue de côté d'un détail du dispositif conforme à l'invention;

La Figure 11 est une vue selon la ligne Xl-Xl de la Figure 10;

La Figure 12 est une vue avec arraché d'un autre détail du dispositif conforme à l'invention;

La Figure 13 est une vue selon la ligne XIII-XIII de la Figure 12;

La Figure 14 est une vue schématique d'un autre détail encore du dispositif conforme à l'invention;

La Figure 15, enfin, est une vue selon la ligne XV-XV de la Figure 14.

On voit, sur ces Figures, que le dispositif conforme à l'invention comporte essentiellement, sur le navire, une plate-forme référencée par 1 dans son ensemble et comprenant, d'une part, une aire d'appontage et de décollage 2, et, d'autre part, une aire de remisage 3 sur laquelle est disposé un hangar 4. Sur cette plate-forme 1 s'étendent, de la zone d'appontage ou de décollage 2, jusqu'au fond du hangar 4, deux rails de guidage 5 et 6. Ces deux rails de guidage 5 et 6 sont deux rails creux, qui peuvent être intégrés ou non au pont de la plate-forme 1. Ils ont une section droite rectangulaire, dont la paroi supérieure est traversée par une rainure débouchant sur la surface externe de la plate-forme 1. Ces deux rails 5 et 6 sont, en outre, linéaires ou légèrement courbes et s'étendent en faisceaux de l'aire d'appontage 2 au hangar 4, symétriquement par rapport à la ligne médiane du bateau. Dans le cas d'une plate-forme ne pouvant recevoir qu'un seul hélicoptère, il n'y aurait, bien entendu qu'un seul rail 5 ou 6.

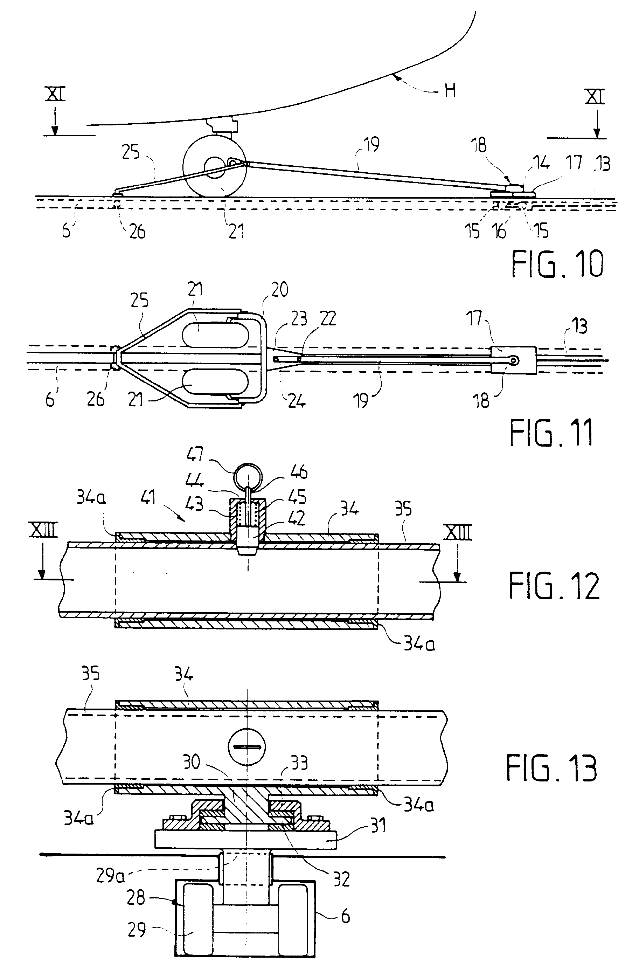

A l'arrière de l'aire d'appontage 2, du côté de ladite aire 2 qui est le plus éloigné du hangar 4, sont disposés, latéralement de part et d'autre de la plate-forme 1, deux treuils latéraux 7 et 8, associés respectivement à des câbles référencés par 9 et 10, et dont une extrémité de chacun est destinée à être solidarisée latéralement à l'hélicoptère, par exemple en l'accrochant sur un anneau généralement prévu en saillie sur l'extrémité externe de l'axe de la ou des roues d'un atterrisseur principal de l'hélicoptère. Dans le hangar 4 est disposé, à l'extrémité de chacun des rails de guidage 5 et 6, un treuil de halage 11 ou 12. Chaque treuil est associé à un câble de traction, ce câble étant référencé pour le treuil 12 par 13 (voir Figure 10). Ce câble 13 s'étend du treuil 12 à un chariot de traction 14, qui est monté mobile le long d'un rail 5 ou 6, et il est accroché sur le chariot 14 par son extrémité qui n'est pas enroulée au treuil 12, en étant guidé et protégé à l'intérieur du rail creux 6. Chaque chariot 14 comprend notamment un corps principal parallépipédique monté dans le rail creux 5 ou 6, dans lequel il est retenu, et associé à des galets verticaux 15 porteurs disposés à ses quatre coins, ces galets verticaux roulant sur le fond dudit rail creux 6, et des galets horizontaux 16 de guidage contre les côtés du rail. Sur la partie supérieure 17 du chariot 14 qui fait légèrement saillie à l'extérieur du rail 5 ou 6 est montée, articulée sur une liaison rotule 18, une barre de remorquage et d'orientation 19.

Cette barre de remorquage 19 est une barre télescopique sur laquelle est articulée en pivotement une chape 20 en forme de U, destinée à être accrochée par ses branches à l'axe commun des deux roues avant 21 jumelées et orientables de l'atterrisseur auxiliaire avant non piloté de l'hélicoptère H. La barre de remorquage 19 est articulée en pivotement par rapport à la chape 20 autour d'un axe 22 disposé sur un prolongement 23 s'étendant à partir de la partie centrale de ladite chape 20, du côté opposé aux branches latérales de ladite chape 20 et symétriquement par rapport à celles-ci. Ledit prolongement 23 et la barre de remorquage 19 sont munis de moyens 24 classiques, tels qu'un cliquet rappelé élastiquement vers un évidement complémentaire, permettant de verrouiller automatiquement ladite chape 20 et la barre de remorquage 19 l'une par rapport à l'autre, lorsque la médiatrice des deux branches latérales de ladite chape 20 se trouve sensiblement dans le prolongement de ladite barre de remorquage 19.

Le dispositif conforme à l'invention comporte encore une mini-barre de guidage 25 conformée en chape, destinée à venir se fixer par ses branches sur les extrémités des branches de la chape 20. Cette mini-barre de guidage 25, en place sur lesdites roues jumelées 21, s'étend du côté opposé à la chape 20, par rapport aux roues 21, à partir de l'axe desdites roues 21, jusqu'à un galet 26 ou petit chariot de guidage dont elle est munie à une de ses extrémités, ledit galet 26 ou petit chariot de guidage étant introduit et coulissant le long du rail creux 6 de guidage; cette mini-barre de guidage 25 n'est utilisée que pour le transfert de l'hélicoptère de la zone de stockage vers la zone de décollage.

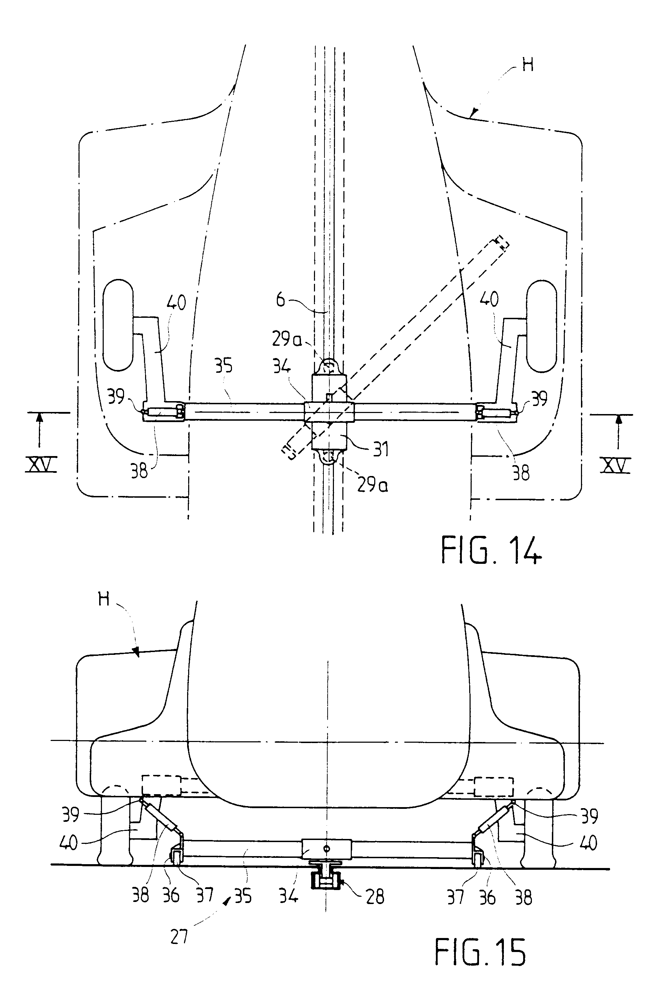

Plus particulièrement, on voit sur les Figures 12 à 15, que le dispositif conforme à l'invention comprend aussi des moyens 27 de maintien et de guidage de l'hélicoptère H par rapport au rail de guidage 5 ou 6. Ces moyens de maintien 27, qui constituent une partie originale du dispositif conforme à l'invention, comprennent un chariot de maintien 28 circulant, grâce à quatre roues verticales 29, dans le rail de guidage 5 ou 6 dont la paroi supérieure le maintient verticalement par rapport à la plate-forme 1, et deux galets horizontaux de guidage 29a. Sur ce chariot de maintien 28 est monté un pivot vertical 30, maintenu en place sur la partie supérieure 31 dudit chariot 28, qui dépasse hors du rail de guidage 6, par la coopération de son pied 32 et des parois intérieures d'une embase creuse 33 fixée sur ladite partie supérieure 31 et dans laquelle ledit pied 32 est monté. Ce pivot 30 peut tourillonner sur 360° par rapport à ladite embase 33 et au chariot de maintien 28. Il est en outre surmonté d'un palier cylindrique ou parallélipipédique 34 creux, dont l'axe est perpendiculaire à l'axe du pivot 30, et dans lequel coulisse librement un bras de maintien 35 qui est un tube cylindrique ou parallélipipédique creux. Chacune des deux extrémités du palier cylindrique 34 est associée à une bague de coulissement anti-frottement 34a, le palier 34 et les deux bagues 34a formant ensemble un double palier. Chacune des deux extrémités du bras 35 est associée à une monture ou chape 36 dans laquelle est montée en pivotement une roulette 37. Les deux roulettes 37, dont est ainsi muni le bras 35, sont destinées à prendre appui sur la plate-forme 1 pour rouler sur celle-ci, supporter les extrémités dudit bras de maintien 35 et interdire tout déplacement vertical de ce bras de maintien 35.

En outre, sur chacune des extrémités du bras de maintien 35, est articulée, au-dessus de chacune des roulettes 37, une bielle à longueur réglable 38 accrochée, à son autre extrémité, sur un point d'amarrage 39 structurel de d'hélicoptère H, ledit hélicoptère H étant muni pour cela, sur chacun de ses côtés, d'un point d'amarrage structurel 39, choisi par exemple sur la pièce de fixation de l'atterrisseur principal 40 sur le fuselage du côté correspondant.

En se reportant plus particulièrement aux Figures 12 et 13, on voit que le bras de maintien 35 et le palier cylidrique ou parallélipipédique 34 sont associés à des moyens de verrouillage référencés par 41 dans leur ensemble, permettant de verrouiller automatiquement ces deux pièces l'une par rapport à l'autre dans une position prédéterminée. Ces moyens de verrouillage 41 comportent, notamment, un pion 42 cylindrique monté coulissant dans un alésage complémentaire 43, qui est un boîtier cylindrique creux et borgne associé au palier 34 dans lequel il débouche à une de ses extrémités. Ce boîtier 43 est disposé en saillie radiale extérieure par rapport au palier 34. Entre le fond 44 dudit boîtier 43 et le pion 42 est disposé un ressort hélicoïdal 45 comprimé, dont l'action repousse ledit pion 42 hors du boîtier 43. La paroi du bras 35 est traversée, au milieu de la longueur de ce bras 35, par un orifice circulaire dont le diamètre intérieur correspond sensiblement au diamètre extérieur du pion 42. Lorsque le boîtier 43 et ledit orifice du bras 35 sont en regard l'un de l'autre, le pion 42 repoussé par le ressort 45 se loge partiellement dans ledit orifice du bras 35 et s'étend aussi partiellement dans ledit boîtier 43, de sorte que ledit palier 34 et le bras de maintien 35 sont verrouillés l'un par rapport à l'autre.

En outre, le pion 42 est prolongé axialement par une tige 46 s'étendant à partir de sa face sur laquelle vient s'appuyer le ressort 45, jusque au-delà du fond 44 qu'elle traverse, cette tige 46 étant terminée, à son extrémité qui est hors du boîtier 43, par un anneau 47 qu'un opérateur peut manipuler pour désemboîter le pion 43 de l'orifice du bras 35, en tirant sur ledit anneau 47 pour comprimer le ressort 45 par le pion 43.

Sur l'aire d'appontage 2 est en outre disposé un marquage délimitant de façon visible, la périphérie d'un cercle 49 d'environ 7 m de diamètre centré sur un point qui est entre les deux rails de guidage 5 et 6, sur la médiatrice 50 desdits deux rails. Le marquage délimite encore sur cette aire d'appontage et de décollage 2 deux lignes d'alignement 48 disposées à plus ou moins 25° de ladite médiatrice 50.

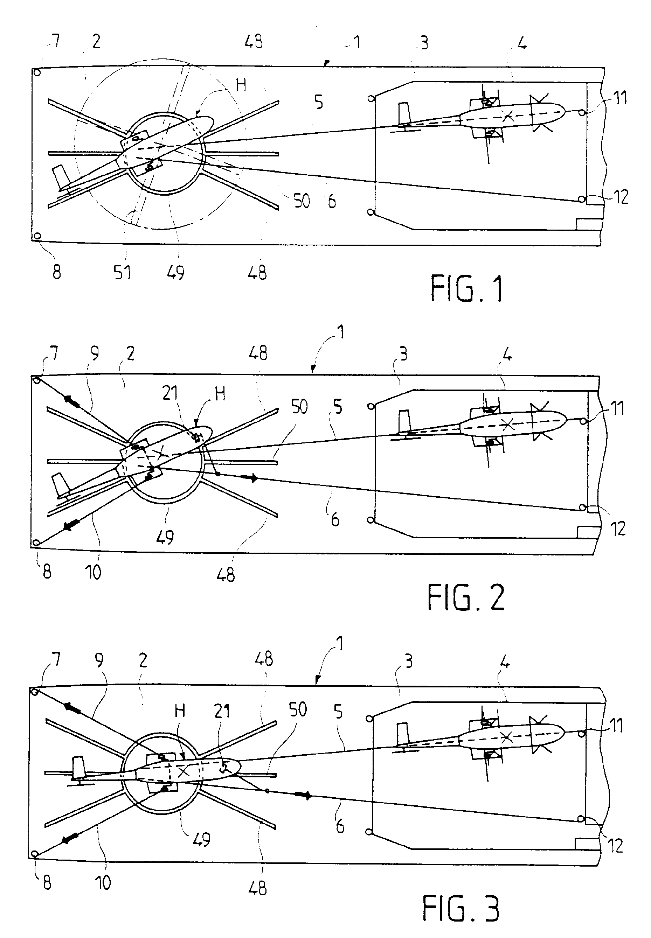

Un tel dispositif de manoeuvre s'utilise de la façon qui va maintenant être décrite. On a représenté plus spécialement sur les Figures 1 à 6 le transfert de l'hélicoptère de son aire d'appontage 2 à son hangar 4.

On voit notamment sur la Figure 1, que l'hélicoptère H se pose sur l'aire d'appontage 2 en s'alignant sur l'axe du navire ou sur l'une des lignes 48 du marquage, le siège du pilote étant approximativement au-dessus de la périphérie du cercle 49, les roues 21 de l'atterrisseur avant étant alors verrouillées dans l'axe de l'hélicoptère H. Par mer calme, le pilote a la possibilité de faire rouler son appareil, rotor tournant et après déverrouillage des roues 21 pour amener les roues 21 à proximité du rail 6 en faisant pivoter l'hélicoptère H sur lui-même, si l'on suppose que l'emplacement dans le hangar 4 correspond au rail 5 est déjà occupé par un autre hélicoptère.

Les moteurs sont ensuite arrêtés. Les opérateurs de la plate-forme 1 viennent alors saisiner l'hélicoptère H par les anneaux situés sur l'axe des roues du train principal 40, et amarrer l'hélicoptère H sur la plate-forme 1 par deux points structuraux et latéraux avant et deux points structuraux latéraux arrière (non représenté), et replient ensuite les pales principales 51 de l'appareil. Par mer forte, l'hélicoptère H est amarré à la plate-forme dès après l'appontage, sans le faire pivoter sur lui-même.

On prépare ensuite la manutention de l'appareil H en effectuant les taches suivantes (Figure 2):
- on amène le chariot de maintien 28 sous le fuselage de l'hélicoptère H, en le déplaçant dans le rail 6;
- on amène le chariot de traction 14 à proximité de l'hélicoptère H, en le déplaçant également dans le rail 6;
- on fixe le bras de maintien 35, par l'intermédiaire des bielles réglables 38 sur les points d'amarrage structuraux 39, après avoir fait coulisser le bras 35 dans le palier 34 et pivoté ce dernier avec le pivot 30 par rapport au chariot 28 dans la mesure nécessaire, compte-tenu des positions occupées par les atterrisseurs principaux 40 de part et d'autre du rail 6;
- l'atterrisseur auxiliaire est déverrouillé en rotation directionnelle;
- on fixe la barre de remorquage 19, par l'intermédiaire de la chape 20, sur les roues 21 de l'atterrisseur auxiliaire avant de l'hélicoptère H;
- on fixe les câbles 9 et 10 des treuils latéraux et arrière 7 et 8 sur les anneaux des roues du train principal 40;
- on dépose les amarrages;
- on met progressivement en tension les câbles 9 et 10 des treuils 7 et 8 latéraux et arrières, ainsi que le câble 13 du chariot de traction 14 avant, les efforts de tension étant bien entendu à moduler en fonction du type et de la masse de l'hélicoptère H.

A titre d'exemple, pour un hélicoptère de moyen tonnage, les treuils 7 et 8 exerceront des efforts résistants ou de freinage de 500 daN sur les câbles 9 et 10, la tension sur le câble 13 étant de 1000 daN.

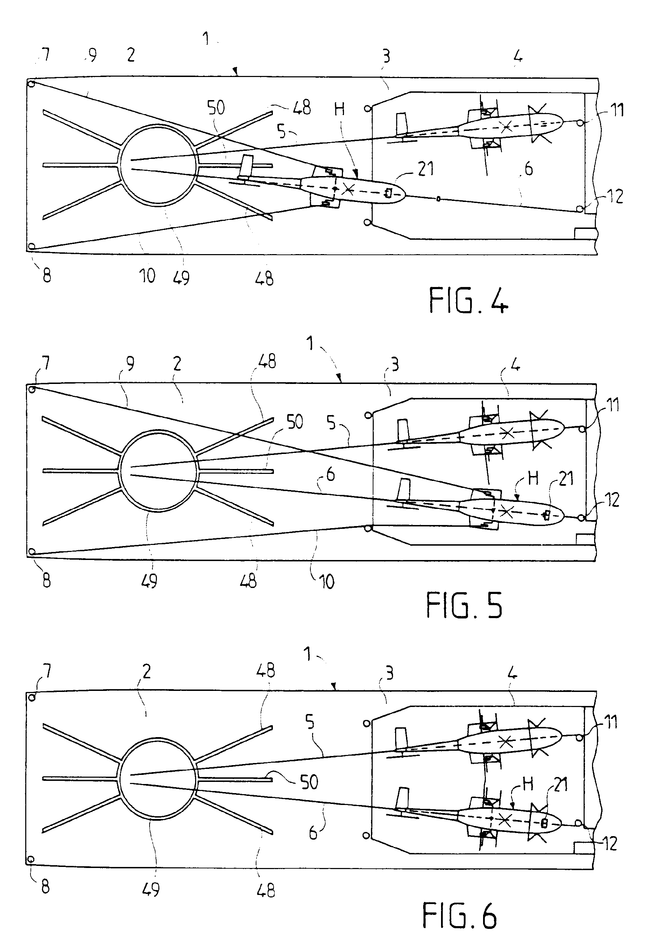

Une fois cette préparation effectuée, on peut commencer la manutention (Figures 3 et 4). Pour cela, on fait avancer l'hélicoptère H vers le hangar 4, en augmentant progressivement l'effort sur le câble 13 jusqu'à, par exemple, pour le type d'hélicoptère précité, un maximum de 1500 daN. Le recentrage de l'hélicoptère H sur le rail de guidage 6 s'effectue alors automatiquement pendant le déplacement de l'appareil. Le bras de maintien 35 se verrouille quant à lui automatiquement par rapport au palier 34 et donc au chariot de maintien 28, lorsque l'hélicoptère H se trouve en position recentrée par rapport au rail de guidage. La barre de remorquage 19 et la chape 20 se verrouillent l'une par rapport à l'autre lorsque ladite barre de remorquage 19 sera axée sur la ligne médiane des deux bras de la chape 20. La manutention sera ensuite arrêtée un peu avant le fond du hangar 4, afin de raccourcir la barre de remorquage télescopique 19, ceci notamment dans le cas où le hangar 4 est peu profond. Puis on fera avancer l'hélicoptère H jusqu'à sa position d'amarrage dans le hangar (Figure 5).

Il reste alors à amarrer l'hélicoptère H et à détacher les deux câbles 9 et 10 des roues des atterrisseurs principaux de l'hélicoptère H (Figure 6).

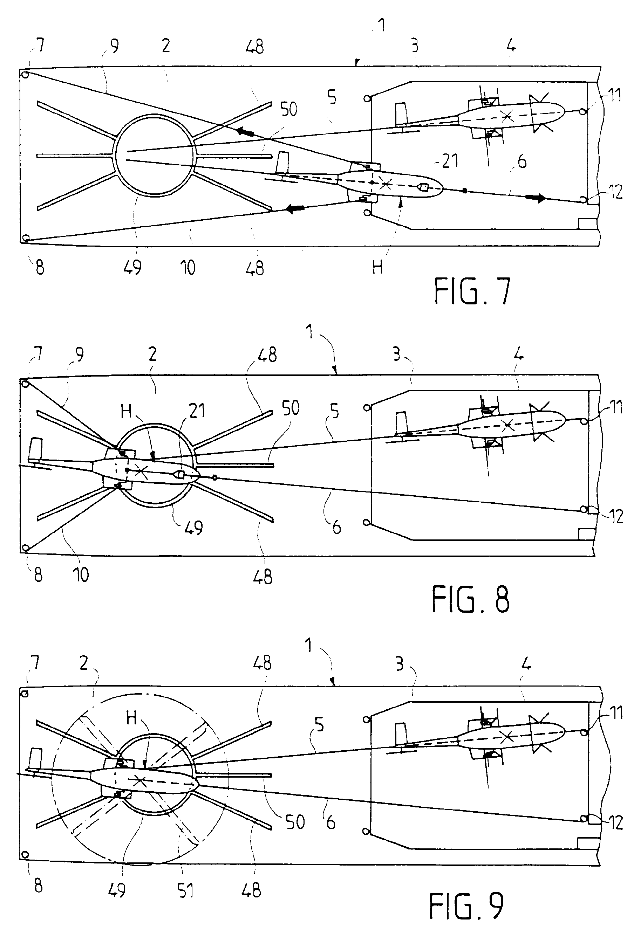

Lorsque l'on veut faire ressortir l'hélicoptère H du hangar 4 pour le transférer jusqu'à son aire de décollage 2, on opère de la façon qui va maintenant être décrite et qui correspond plus spécialement aux étapes représentées sur les Figures 7 à 9.

Dans un premier temps, on prépare la manutention de l'hélicopère H, en effectuant la succession de taches suivantes:
- la barre de remorquage 19 et le chariot de maintien 28 étant toujours en place par rapport à l'hélicoptère H, on fixe la mini-chape 25 sur la chape 20, le galet 26 étant disposé dans le rail de guidage 6, à l'arrière de l'atterrisseur auxiliaire et des roues 21 comme représenté sur les Figures 10 et 11;
- on fixe les deux câbles 9 et 10 des treuils 7 et 8 sur les anneaux de saisinage précités disposés sur les axes des roues des atterrisseus principaux 40;
- on libère l'hélicoptère de ses moyens d'amarrage dans le hangar 4;
- on met progressivement en tension les câbles 9 et 10 et le câble 13 du chariot 14, par exemple dans le cas d'un hélicoptère du type précité, en affectant aux câbles latéraux 9 et 10 des tensions de 500 daN et au câble 13 une tension d'environ 1000 daN. Là encore, ces efforts sont à moduler en fonction du type et de la masse de l'hélicoptère.

On recule ensuite l'hélicoptère H vers l'aire de décollage 2 de la plate-forme en augmentant progressivement l'effort dans les câbles 9 et 10, jusqu'à, par exemple, un maximum de 800 daN (Figure 7). Lorsque le chariot de maintien 28 arrive en bout du rail de guidage 6, on arrête l'opération de recul (Figure 8). On saisine alors l'hélicoptère H par les anneaux situés sur l'axe des roues principales, côté extérieur, et on l'amarre par deux points structuraux latéraux à l'avant et à l'arrière.

Il faut ensuite désacouppler l'hélicoptère H du bras de maintien 35, de la mini-chape 25 et de la barre de remorquage 19, et libérer ledit hélicoptère H des deux câbles 9 et 10. On fait alors pivoter le bras de maintien 35 sur le chariot 28, dans sa position de verrouillage, pour le disposer sensiblement parallèlement à l'axe du rail de guidage 6. Eventuellement des moyens d'encliquetage automatiques (non représentés) permettent d'immobiliser le point 30, et donc le palier 34 et le bras 35, dans cette position particulière d'orientation du bras 35, vis-à-vis du chariot 28, afin que, sous l'effet des mouvements de la plate-forme, le bras 35 ne puisse pivoter et venir heurter les atterrisseurs principaux 40 au cours de la phase de décollage. Puis on ramène le chariot de traction 14 et la barre de remorquage 19 dans le hangar 4.

Il reste ensuite à déplier les pales 51 de l'hélicoptère H, à déposer les saisinages et les amarrages. L'hélicoptère H, après démarrage des moteurs, est prêt à décoller. On dégage ensuite la plate-forme 1 après décollage, en ramenant le chariot de maintien 28 dans le hangar 4.

Le dispositif selon l'invention a été décrit ci-dessus dans son application à la manoeuvre d'un hélicoptère équipé d'un train d'atterrissage tricycle comportant deux atterrisseurs principaux et latéraux à roues ainsi qu'un atterrisseur auxiliaire avant à roues orientables mais non piloté. Cependant ce dispositif peut être aussi utilisé pour manoeuvrer des hélicoptères dont le train d'atterrissage comporte deux atterrisseurs principaux latéraux à roues à l'avant et une roulette arrière et orientable supportée sous la queue de l'hélicoptère. Dans ce dernier cas la manoeuvre, effectuée comme décrit ci-dessus avec les mêmes outillages du dispositif propre à l'invention, requiert seulement une opération supplémentaire que l'on fait subir à l'hélicoptère après son appontage et avant l'arrêt des rotors. Cette opération supplémentaire consiste à faire faire sensiblement un demi-tour à l'hélicoptère en le pivotant sur lui-même d'environ 180° par commande sur le rotor arrière en rotation, afin de le placer dans une position dans laquelle la roulette arrière orientable se trouve au voisinage de celui des rails 5 ou 6 que l'on veut utiliser, et en direction du hangar 4 par rapport aux atterrisseurs principaux, qui sont quant à eux tournés du côté des treuils latéraux arrières 7 et 8. On retrouve ainsi, pour le transfert de l'hélicoptère à roulette arrière orientale vers le hangar 4, les conditions initiales pour la manoeuvre d'un hélicoptère à atterriseur auxiliaire avant à roue(s) orientable(s). De même, après la sortie du hangar 4 et retour sur l'aire 2 en vue du décollage, il faut faire à nouveau pivoter l'hélicoptère sur lui-même sensiblement d'un demi-tour pour le mettre au bon cap de décollage, avant d'effectuer ce dernier.

Les signes de référence insérés après les caractéristiques techniques mentionnées dans les revendications, ont pour seul but de faciliter la compréhension de ces dernières, et n'en limitent aucunement la portée.

## Revendications

1. Dispositif consistant en la combinaison d'un engin (H) supporté par un train principal et au moins une roue orientable (21), tel qu'un hélicoptère, et de moyens de manoeuvre dudit engin (H) entre deux zones (2, 3) prédéterminées sur une plate-forme sensiblement plane (1), ce dispositif comportant un rail de guidage (5, 6) s'étendant d'une zone (2) à l'autre (3) de la plate-forme (1), un mécanisme de halage (12, 13, 14, 19, 20) disposé sur la plate-forme (1) et destiné à entraîner l'engin (H) d'une zone (2, 3) à l'autre (3, 2), une barre d'orientation (19) de la trajectoire de l'engin (H), destinée à être reliée par une de ses extrémités audit engin (H), son autre extrémité coulissant le long du rail de guidage (6), un chariot de maintien (28) apte à se déplacer le long du rail de guidage (5, 6), ce chariot de maintien (28) étant associé à des moyens de liaison (30, 31, 32, 33, 34, 35, 38, 39) destinés à relier le chariot de maintien (28) à l'engin (H), le dispositif étant caractérisé en ce que au moins deux points d'amarrage (39) latéraux sont disposés sur l'engin (H) à manoeuvrer de part et d'autre d'un plan vertical médian de l'engin (H), et en ce que les moyens de liaison comportent:
- un bras de maintien (35) associé à des moyens d'attache (38) permettant d'attacher chacune de ses extrémités à l'un au moins des points d'amarrage (39) latéraux et à des moyens (37) par lesquels chacune de ses extrémités s'appuie sur la plate-forme plane (1);
- un organe de liaison (34) monté sur le chariot de maintien (28) et sur lequel ledit bras de maintien (35) peut coulisser entre ses deux extrémités, ledit organe de liaison (34) maintenant ledit bras de maintien (35) par rapport audit chariot de maintien (28);
- des moyens de verrouillage (42, 43, 44, 45) automatique dudit organe de liaison (34) par rapport au bras de maintien (35) dans une position correspondant sensiblement au centrage de l'engin (H) sur le rail de guidage (6);
- des moyens pivots (30, 31, 32, 33) autorisant le pivotement du bras de maintien (35) par rapport au chariot de maintien (28) autour d'un axe sensiblement perpendiculaire à la plate-forme (1).

2. Dispositif selon la revendication 1, caractérisé en ce que l'extrémité de la barre d'orientation (19) reliée à l'engin est reliée à ladite roue orientable.

3. Dispositif selon la revendication 2, caractérisé en ce que la barre d'orientation (19) est articulée en pivotement par rapport à ladite roue orientable (21), ledit dispositif comportant des moyens de verrouillage automatique de la barre d'orientation (19) par rapport à ladite roue orientable (21) dans une position où l'axe de ladite barre d'orientation se trouve sensiblement dans un plan parallèle ou confondu avec le plan médian de ladite roue orientable (21).

4. Dispositif selon l'une des revendications 2, ou 3, caractérisé en ce que la barre d'orientation (19) est reliée à ladite roue orientable (21) par l'intermédiaire d'une chape (20) montée sur l'axe de ladite roue orientable.

5. Dispositif selon la revendication 4, caractérisé en ce que la barre d'orientation (19) est articulée en pivotement sur la chape (20).

6. Dispositif selon l'une des revendications 1 à 5, caractérisé en ce que la barre d'orientation est de longueur réglable.

7. Dispositif selon l'une des revendications 1 à 6, caractérisé en ce que le mécanisme de halage comporte, vers une extrémité d'un rail de guidage (5), un treuil de traction (12) enroulant un câble (13) relié à un chariot de traction (14) monté mobile le long du rail de guidage (6) et sur lequel est articulée la barre d'orientation (19) à son extrémité la plus éloignée de l'engin (H), la barre d'orientation (19) servant ainsi de barre de traction de l'engin (H).

8. Dispositif selon la revendication 7, caractérisé en ce que le rail de guidage (6) est un rail creux dans lequel s'étend le câble (13) relié au chariot de traction (14).

9. Dispositif selon l'une des revendications 7 ou 8, caractérisé en ce qu'il comporte deux treuils latéraux (7, 8) sur lesquels sont enroulés des câbles (9, 10) destinés à être reliés latéralement à l'engin (H), ces treuils latéraux (7,8) étant disposés sur la plate-forme (1) dans celle des deux zones qui est opposée à la zone dans laquelle est disposé le treuil de traction (12).

10. Dispositif selon l'une des revendications 1 à 9, caractérisé en ce que les points d'amarrage (39) latéraux, sur lesquels les extrémités du bras de maintien (35) sont attachées, sont proches de jambes latérales de support de roues du train principal (40).

11. Dispositif selon la revendication 10, caractérisé en ce que les points d'amarrage (39) sont des points d'amarrage structuraux sur le fuselage de l'engin (H).

12. Dispositif selon l'une des revendications 10 ou 11, caractérisé en ce que les moyens d'attache d'une extrémité du bras de maintien (35) à un point d'amarrage (39) comportent au moins une bielle réglable en longueur (38).

13. Dispositif selon l'une des revendications 1 à 12, caractérisé en ce que le bras de maintien (35) est muni, vers chacune de ses extrémités, d'au moins une roulette (36) destinée à prendre appui sur la plate-forme (1).

14. Dispositif selon l'une des revendications 1 à 13, caractérisé en ce que sur le chariot de maintien (28) est monté un pivot (30) qui porte un palier parallélipipédique ou cylindrique (34) d'axe sensiblement perpendiculaire à l'axe du pivot, ledit palier (34) recevant en son intérieur le bras de maintien (35) et étant l'organe de liaison par rapport auquel ledit bras de maintien (35) est monté coulissant.

15. Dispositif selon l'une des revendications 1 à 14, caractérisé en ce que les moyens de verrouillage comportent un pion (42) s'étendant en position de verrouillage partiellement dans un premier évidement (43) ménagé dans l'organe de liaison (34) et partiellement dans un deuxième évidement ménagé sur le bras de maintien (35), ledit pion (42) étant totalement disposé, en position déverrouillée, dans l'un (43) de ces deux évidements et étant associé à des moyens élastiques (45) tendant à le repousser hors dudit évidement (43) vers celui de l'organe de liaison (34) ou du bras de maintien (35), dans lequel est ménagé l'autre évidement.

16. Dispositif selon la revendication 15, caractérisé en ce que l'évidement dans lequel est disposé le pion (42) dans sa position déverrouillée est ménagé dans l'organe de liaison (34).

17. Dispositif selon l'une des revendications 15 ou 16, caractérisé en ce qu'il est associé à des moyens de déverrouillage manuel des moyens de verrouillage automatique dudit organe de liaison (34) par rapport au bras de maintien (35).

18. Dispositif selon la revendication 17, caractérisé en ce que les moyens de déverrouillage manuel comportent une tirette extérieure (47) reliée au pion (42) et propre à être saisie par un opérateur.

19. Dispositif selon l'une des revendications 1 à 18, caractérisé en ce qu'il comporte des moyens auxiliaires (25) de guidage de roue(s) orientable(s) (21) le long du rail de guidage (6).

20. Dispositif selon la revendication 19, caractérisé en ce que lesdits moyens auxiliaires comportent une chape (25) destinée à être montée sur l'axe d'une roue orientable par l'intermédiaire de la barre (19), ladite chape étant munie à une de ses extrémités d'un galet (26) coulissant le long du rail de guidage (6).

## Patentansprüche

1. Vorrichtung, bestehend aus der Kombination einer Maschine (H), die von einem Hauptfahrwerk und wenigstens einem verstellbaren Rad (21) getragen ist, z. B. ein Hubschrauber, und Mitteln zum Verfahren der Maschine (H) zwischen zwei vorbestimmten Bereichen (2, 3) auf einer im wesentlichen ebenen Plattform (1), wobei diese Vorrichtung eine Führungsschiene (5, 6) enthält, die sich von dem einen Bereich (2) der Plattform (1) zu dem anderen Bereich (3) erstreckt, sowie einen Ziehmechanismus (12, 13, 14, 19, 20), der auf der Plattform (1) angeordnet und dafür vorgesehen ist, die Maschine (H) von dem einen Bereich (2, 3) in den anderen (3, 2) zu bewegen, eine Ausrichtstange (19) für die Bewegungsbahn der Maschine (H), welche dazu vorgesehen ist, mittels eines ihrer Enden mit der Maschine (H) verbunden zu werden, während ihr anderes Ende entlang der Führungsschiene (6) gleitet, einen Haltewagen (28), der in der Lage ist, sich entlang der Führungsschiene (5, 6) zu verstellen, wobei dieser Haltewagen (28) Verbindungsmitteln (30, 31, 32, 33, 34, 35, 38, 39) zugeordnet ist, die dazu vorgesehen sind, den Haltewagen (28) mit der Maschine (H) zu verbinden, wobei die Vorrichtung dadurch gekennzeichnet ist, daß wenigstens zwei seitliche Ankoppelstellen (39) an der zu verfahrenden Maschine (H) auf der einen und auf der anderen Seite einer vertikalen Mittelebene der Maschine (H) angeordnet sind und daß die Verbindungsmittel enthalten:
- einen Haltearm (35), der Anschlußmitteln (38) zugeordnet ist, die das Anschließen jedes seiner Enden an wenigstens eine der seitlichen Ankoppelstellen (39) und an Mittel (37) ermöglicht, durch die sich jedes seiner Enden an der ebenen Plattform (1) abstützt;
- ein Verbindungsorgan (34), das auf dem Haltewagen (28) angebracht ist und auf dem der Haltearm (35) zwischen seinen beiden Enden gleiten kann, wobei das Verbindungsorgan (34) den Haltearm (35) bezüglich des Haltewagens (28) hält;
- Mittel (42, 43, 44, 45) zum automatischen Verriegeln des Verbindungsorgans (34) bezüglich des Haltearms (35) in einer Stellung, die im wesentlichen der Zentrierung der Maschine (H) auf der Führungsschiene (6) entspricht;
- Schwenkmittel (30, 31, 32, 33), die das Schwenken des Haltearms (35) bezüglich des Haltewagens (28) um eine zur Plattform (1) im wesentlichen senkrechte Achse ermöglichen.

2. Vorrichtung nach Anspruch 1, dadurch gekennzeichnet, daß das mit der Maschine verbundene Ende der Ausrichtstange (19) mit dem verstellbaren Rad verbunden ist.

3. Vorrichtung nach Anspruch 2, dadurch gekennzeichnet, daß die Ausrichtstange (19) bezüglich des verstellbaren Rades (21) schwenkbar angelenkt ist, wobei die Vorrichtung Mittel zum automatischen Verriegeln der Ausrichtstange (19) bezüglich des verstellbaren Rades (21) in einer Stellung enthält, in der sich die Achse der Ausrichtstange im wesentlichen in einer Ebene befindet, die parallel zur Mittelebene des verstellbaren Rades (21) ist oder mit dieser zusammenfällt.

4. Vorrichtung nach einem der Ansprüche 2 oder 3, dadurch gekennzeichnet, daß die Ausrichtstange (19) mit dem verstellbaren Rad (21) über eine Gabel (20) verbunden ist, die auf der Achse des verstellbaren Rades angebracht ist.

5. Vorrichtung nach Anspruch 4, dadurch gekennzeichnet, daß die Ausrichtstange (19) schwenkbar an der Gabel (20) angelenkt ist.

6. Vorrichtung nach einem der Ansprüche 1 bis 5, dadurch gekennzeichnet, daß die Länge der Ausrichtstange einstellbar ist.

7. Vorrichtung nach einem der Ansprüche 1 bis 6, dadurch gekennzeichnet, daß der Ziehmechanismus an einem Ende einer Führungsschiene (5) eine Zugwinde (12) enthält, die ein Kabel (13) aufrollt, das mit einem Zugwagen (14) verbunden ist, der entlang der Führungsschiene (6) bewegbar angebracht ist und an dem die Ausrichtstange (19) mit ihrem von der Maschine (H) am weitesten entfernten Ende angelenkt ist, wodurch die Ausrichtstange (19) auch als Zugstange für die Maschine (H) dient.

8. Vorrichtung nach Anspruch 7, dadurch gekennzeichnet, daß die Führungsschiene (6) eine hohle Schiene ist, in der sich das mit dem Zugwagen (14) verbundene Kabel (13) erstreckt.

9. Vorrichtung nach einem der Ansprüche 7 oder 8, dadurch gekennzeichnet, daß sie zwei seitliche Winden (7, 8) enthält, auf denen Kabel (9, 10) aufgewickelt sind, die dazu vorgesehen sind, seitlich mit der Maschine (H) verbunden zu werden, wobei diese seitlichen Winden (7, 8) auf der Plattform (1) in demjenigen der beiden Bereiche angeordnet sind, der zu dem Bereich entgegengesetzt ist, in dem die Zugwinde (12) angeordnet ist.

10. Vorrichtung nach einem der Ansprüche 1 bis 9, dadurch gekennzeichnet, daß die seitlichen Ankoppelstellen (39), an denen die Enden des Haltearms (35) angeschlossen sind, in der Nähe der seitlichen Trägerbeine der Räder des Hauptfahrwerks (40) liegen.

11. Vorrichtung nach Anspruch 10, dadurch gekennzeichnet, daß die Ankoppelstellen (39) Ankoppelstellen an der Struktur des Rumpfes der Maschine (H) sind.

12. Vorrichtung nach einem der Ansprüche 10 oder 11, dadurch gekennzeichnet, daß die Anschlußmittel für ein Ende des Haltearms (35) an einer Ankoppelstelle (39) wenigstens ein Zwischenglied (38) mit einstellbarer Länge enthalten.

13. Vorrichtung nach einem der Ansprüche 1 bis 12, dadurch gekennzeichnet, daß der Haltearm (35) an jedem seiner Enden mit wenigstens einem Rädchen (36) versehen ist, das dazu vorgesehen ist, sich auf der Plattform (1) abzustützen.

14. Vorrichtung nach einem der Ansprüche 1 bis 13, dadurch gekennzeichnet, daß am Haltewagen (28) ein Zapfen (30) angebracht ist, der ein Parallelflach- oder Zylinderlager (34) mit zur Achse des Zapfens im wesentlichen senkrechter Achse trägt, wobei das Lager (34) in seinem Inneren den Haltearm (35) aufnimmt und das Verbindungsorgan ist, bezüglich dessen der Haltearm (35) gleitend angebracht ist.

15. Vorrichtung nach einem der Ansprüche 1 bis 14, dadurch gekennzeichnet, daß die Verriegelungsmittel einen Stift (42) enthalten, der sich in der Verriegelungsstellung teilweise in eine im Verbindungsorgan (34) ausgebildete erste Aussparung (43) und teilweise in eine zweite Aussparung erstreckt, die auf dem Haltearm (35) ausgebildet ist, wobei der Stift (42) in der gelösten Stellung vollständig in einer (43) dieser beiden Aussparungen angeordnet und Federmitteln (45) zugeordnet ist, die den Stift aus der Aussparung (43) zu dem Verbindungsorgan (34) oder zu dem Haltearm (35) zu drücken suchen, in dem die andere Aussparung ausgebildet ist.

16. Vorrichtung nach Anspruch 15, dadurch gekennzeichnet, daß die Aussparung, in der der Stift (42) in seiner entriegelten Stellung angeordnet ist, im Verbindungsorgan (34) ausgebildet ist.

17. Vorrichtung nach einem der Ansprüche 15 oder 16, dadurch gekennzeichnet, daß ihr ein manuelles Entriegelungsmittel für die Mittel zum automatischen Verriegeln des Verbindungsorgans (34) bezüglich des Haltearms (35) zugeordnet ist.

18. Vorrichtung nach Anspruch 17, dadurch gekennzeichnet, daß das manuelle Entriegelungsmittel eine Außenzugvorrichtung (47) enthält, die mit dem Stift (42) verbunden und geeignet ist, von einem Bediener ergriffen zu werden.

19. Vorrichtung nach einem der Ansprüche 1 bis 18, dadurch gekennzeichnet, daß sie Hilfsmittel (25) zum Führen des verstellbaren Rades (21) oder der verstellbaren Räder entlang der Führungsschiene (6) enthält.

20. Vorrichtung nach Anspruch 19, dadurch gekennzeichnet, daß die Hilfsmittel eine Gabel (25) enthalten, die dazu vorgesehen ist, auf der Achse von einem der verstellbaren Räder mittels einer Stange (19) angebracht zu werden, wobei jede Gabel an einem ihrer Enden mit einer Rolle (26) versehen ist, die entlang der Führungsschiene (6) rollt.

## Claims

1. Device consisting of a combination of a flying machine (H) supported by a principal landing gear and at least one swingable wheel (21), such as a helicopter, and means for manoeuvering said flying machine (H) between two pre-determined zones (2, 3) on a substantially plane platform (1), this device comprising at least one guide rail (5, 6) extending from one zone (2) of the platform (1) to the other (3), a hauling (12, 13, 14, 19, 20) mechanism adapted to pull the machine (H) from one zone (2) to the other (3), a bar (19) for orientating the path of the machine (H), intended to be connected by one of its ends to the said machine (H), its other end sliding along the guide rail (6), and at least one holding trolley (28) suitable for movement along the guide rail (5, 6), this holding trolley (28) being associated with means of connection (30, 31, 32, 33, 34, 35, 38, 39) intended for connecting the holding trolley (28) to the machine (4), the device being characterized in that at least two lateral mooring points (39) are on the machine (H) on both sides of a vertical median plane of the machine (H), and in that the means of connection comprise :
- a holding arm (35) associated with means (38) of attaching each of its ends to one at least of the lateral mooring points (39) and with means (37) of supporting each of its ends on the plane platform (1) ;
- a connecting unit (34) mounted on the holding trolley (28) on which the said holding arm (35) may slide between its two ends, the said connecting unit (34) maintaining the said holding arm (35) with respect to the said holding trolley (28) ;
- means (42, 43, 44, 45) for automatically locking the said connecting unit (34) with respect to the holding arm (35) in a position corresponding substantially to the centring of the machine (H) on the guide rail (6) ;
- means for pivoting (30, 31, 32, 33) which permit the pivoting of the holding arm (35) with respect to the holding trolley (28) around an axis substantially perpendicular to the platform (1).

2. Device according to Claim 1, characterized in that the end of the orientation bar (19) connected to the machine is connected to the said rotatable wheel.

3. Device according to Claim 2, characterized in that the orientation bar (19) is articulated so as to pivot with respect to the said swingable wheel (21), the said device comprising means of automatically locking the orientation bar (19) with respect to the said swingable wheel (21) in a position in which the axis of the said orientation bar lies substantially in a plane parallel to or coincident with the median plane of the said swingable wheel (21).

4. Device according to Claim 2 or 3, characterized in that the orientation bar (19) is connected to the said swingable wheel (21) by means of a fork (20) mounted on the axis of the said swingable wheel.

5. Device according to Claim 4, characterized in that the orientation bar (19) is articulated so as to pivot on the fork (20).

6. Device according to one of Claims 1 to 5, characterized in that the orientation bar is of adjustable length.

7. Device according to one of Claims 1 to 6, characterized in that the hauling mechanism comprises, towards one end of a guide rail (5), a towing winch (12) on which is wound a cable (13) connected to a towing trolley (14), moveable along the guide rail (6) and on which is articulated the orientation bar (19) at its end furthest from the machine (H), the orientation bar (19) thus being used as a towing bar for the machine (H).

8. Device according to Claim 7, characterized in that the guide rail (6) is a hollow rail within which the cable (13) connected to the towing trolley (14) extends.

9. Device according to Claim 7 or 8, characterized in that it comprises two lateral winches (7, 8) on which are wound cables (9, 10) intended to be connected laterally to the machine (H), these lateral winches (7, 8) being disposed on the platform (1) in whichever of the two zones is opposite the zone in which the towing winch (12) is disposed.

10. Device according to one of Claims 1 to 9, characterized in that the lateral mooring points (39), on to which the ends of the holding arm (35) are attached, are close to lateral supporting struts of the wheels of the principal landing gear (40).

11. Device according to Claim 10, characterized in that the mooring points (39) are structural mooring points on the fuselage of the machine (H).

12. Device according to Claim 10 or 11, characterized in that the means of attachment of one end of the holding arm (35) to a mooring point (39) comprises at least one rod (38), adjustable in length.

13. Device according to one of Claims 1 to 12, characterized in that the holding arm (35) is equipped, towards each one of its ends, with at least one wheel (36) intended to rest on the platform (1).

14. Device according to one of Claims 1 to 13, characterized in that on the holding trolley (28) is mounted a pivot (30) which carries a cylindrical or parallelepipedal-shaped bearing (34) with its axis substantially perpendicular to the axis of the pivot, the said bearing (34) receiving into its interior the holding arm (35) and being the connecting unit with respect to which the said holding arm (35) is mounted so that it can slide.

15. Device according to one of Claims 1 to 14, characterized in that the means forlocking comprise a pin (42) extending, in the locked position, partially into a first recess (43) cut into the connecting unit (34) and partially into a second recess cut on the holding arm (35), said pin (42) being completely disposed in the unlocked position in one (43) of these two recesses and being associated with elastic means (45) tending to push it out of the said recess (43) towards that of the connecting unit (34) or of the holding arm (35) in which the other recess is cut.

16. Device according to Claim 15, characterized in that the recess in which the pin (42) is disposed in its unlocked position is cut into the connecting unit (34).

17. Device according to Claim 15 or 16, characterized in that it is associated with means for manually unlocking the means of automatic locking of the said connecting unit (34) with respect to the holding arm (35).

18. Device according to Claim 17, wherein the means for manual unlocking comprise an outer pull handle (47) connected to the pin (42) and intended to be grasped by an operator.

19. Device according to one of Claims 1 to 18, characterized in that it comprises auxiliary means (25) for guiding the rotatable wheel or wheels (21) along the guide rail (6).

20. Device according to Claim 19, wherein the said auxiliary means comprise a fork (25) intended for being mounted on the axis of a rotatable wheel by means of the bar (19), the said fork being provided at one of its ends with a roller (26) sliding along the guide rail (6).
